# FASCICULE DE BREVET EUROPEEN

(11) **EP 2 938 113 B1**
(45) Date de publication et mention de la délivrance du brevet: **20.11.2019**
(21) Numéro de dépôt: 14200498.5
(22) Date de dépôt: 29.12.2014
(51) Int. Cl.: H04W 16/06, H04L 5/00, H04W 72/04, H04J 11/00, H04W 16/14, H04W 16/18

(54) **Procédé et système de partage du spectre radio**
Verfahren und System zur gemeinsamen Nutzung der verfügbaren Funkfrequenzen
Method and system for sharing the radio spectrum

(30) Priorité: 31.12.2013 FR 1303117
(43) Date de publication de la demande: 28.10.2015
(73) Titulaire: Thales, 92400 Courbevoie (FR)
(72) Inventeur: Soulie, Antoine, 92622 Gennevilliers Cedex (FR)
(74) Mandataire: Dudouit, Isabelle

(56) Documents cités:
- EP-A1- 2 330 854
- WO-A1-2012/158548
- US-A1- 2009 161 610
- US-A1- 2012 057 533

## Description

L'objet de l'invention concerne un procédé et un système permettant de partager le spectre radio entre plusieurs systèmes ou entre plusieurs réseaux qui, en cours de fonctionnement, sont amenés à utiliser une même bande de spectre ou une partie d'une bande de spectre.

L'un des principaux problèmes liés à la gestion du spectre radio a trait aux interférences que les systèmes de transmission d'un réseau mobile génèrent sur les systèmes en réception d'un autre réseau de diffusion (en anglo-saxon « broadcast ») ou d'un autre réseau mobile. Ces interférences réduisent la portée et/ou la qualité des transmissions.

L'état de l'art connu du demandeur consiste, par exemple, à gérer le spectre de manière statique, en menant des études amont de compatibilité permettant de déterminer les conditions d'utilisation de ces systèmes. Le rôle de l'union international des communications ou ITU et de la CEPT (European Communication of Postal and Télécommunications administrations) au niveau européen est de gérer cette coexistence. La coexistence est généralement assurée en définissant un gabarit d'émission pour chacun des systèmes, et en y ajoutant une bande de garde permettant de considérer les systèmes adjacents comme isolés sur le plan radioélectrique. Le problème résultant de cette approche est double: le spectre n'est partagé que statiquement et la bande de garde est en général importante.

De nombreuses études ont lieu sur la radio cognitive en général, dont le but est de scruter (scanner) l'environnement radio électrique et d'exploiter cette information pour utiliser le spectre laissé vacant. Le problème principal de cette approche vient du fait que les systèmes adjacents ne se connaissent pas, a priori, et que les règles de priorité d'accès au spectre ne sont généralement pas définies, à moins qu'un accord de licence dit LSA, abrégé anglo-saxon de Licence Scheme Agreement, entre un utilisateur principal et un utilisateur secondaire soit défini. Cet accord est spécifique entre deux usagers qui utilisent une gestion manuelle pour se répartir le spectre.

Une autre approche se trouve dans la technologie LTE (standardisée par le 3GPP Long Term Evolution) connue du domaine technique qui a introduit une technique de partage du spectre semi-statique entre stations de base adjacentes. Le protocole de répartition du spectre ou en anglo-saxon « load sharing », est transporté par un réseau internet IP, auquel les stations de bases sont raccordées. Chaque opérateur définit les règles de partage du spectre qu'il souhaite utiliser. En particulier, le LTE offre la possibilité de créer un sous-réseau de diffusion ou « broadcast » sur un ensemble de zones géographiques prédéterminé. Ce sous-réseau partage le spectre et la couche physique avec les transmissions point à point ou unicast, sur l'ensemble des stations de base d'une zone géographique. Dans le cadre de cette technologie, le partage du spectre semi-statique a lieu uniquement au sein d'un seul système pour lequel les règles de priorité d'accès au spectre sont identiques. Le sous-réseau de broadcast utilise le même standard de transmission et les mêmes équipements que le LTE.

La demande de brevet US 2012/057533 divulgue un procédé de partage de spectre entre deux réseaux qui prend en compte les caractéristiques des systèmes, des valeurs de coexistence, de l'information environnementale de spectre de radio des réseaux voisins, pour allouer à un réseau sans fil, une portion du spectre ou d'une bande de fréquence.

Dans la suite de la description, on désigne sous l'expression « système contraint » un système pour lequel la bande de fréquence est fixe, et par « système non contraint » un système pour lequel la bande de fréquence est flexible, en largeur et/ou en position dans le spectre, sans avoir besoin de le passer à l'arrêt. La technologie LTE répond en particulier à ce critère.

En pratique, un tel système est couramment implémenté en utilisant une modulation par sous-porteuses orthogonales, mais ce type d'implémentation n'est pas une obligation. L'expression « adjacent » correspond à une adjacence au sens spectral de deux systèmes ayant une zone de couverture radio commune.

Le terme canalisation est ici synonyme de largeur de canal radio. Pour un système radio donné, la canalisation est définie par la quantité de spectre nécessaire à la transmission et inclut des bandes de garde nécessaires permettant d'éviter les interférences avec les systèmes adjacents. Dans le système LTE, la canalisation est quantifiée et prend une valeur dans l'ensemble {1,4 MHz, 3 MHz, 5 MHz, 10 MHz, 15 MHz, 20 MHz}. Le système LTE peut être positionné dans différentes bande de fréquences, typiquement les bandes de communication mobiles civiles allouées par l'ITU, mais peut également être déployé dans d'autres bandes définies par chaque état ou organisme officiel propriétaire de bande (e.g. OTAN).

Un des objectifs de la présente invention est de proposer un procédé permettant de gérer le partage dynamique du spectre entre plusieurs systèmes ou entre deux réseaux qui vont être conduit à utiliser la même bande de base.

L'invention concerne un procédé de partage du spectre dans un réseau de communication comportant au moins un premier réseau comprenant des premiers systèmes S₁ de transmission et un deuxième réseau comprenant des deuxièmes systèmes de transmission S₂, les réseaux travaillant dans des gammes de fréquences pouvant se superposer au moins partiellement et dans une même zone géographique, conduisant à partager une bande de spectre, caractérisé en ce qu'il comporte au moins les étapes suivantes :
- Affilier le au moins premier système et le au moins deuxième système à un serveur et communiquer à ce dernier des règles de partage du spectre,
- Déterminer s'il existe un système contraint pour lequel la bande de fréquence est fixe et si oui, attribuer audit système contraint une première sous-bande de spectre de la bande de spectre partagée, pour une zone géographique donnée, générer une alarme si ce n'est pas possible,

- Effectuer cette attribution pour toutes les zones géographiques couvertes par ledit système contraint,
- Identifier les systèmes non contraints et, en appliquant les règles de partage du spectre, attribuer à chacun des systèmes non contraints et chaque zone géographique définie, une sous-bande de spectre pour chacun des systèmes en fonction de la zone géographique couverte par le réseau, et dans le cas où il y a impossibilité de trouver une sous-bande de spectre, générer une alarme.

Les systèmes non contraints utilisent, par exemple, une modulation OFDM avec une largeur de bande variable d'un système à l'autre et une bande de garde est insérée au niveau de la ou des sous-bandes attribuées à un système.

Pour la mise en œuvre du procédé, on utilise par exemple, une liaison IP entre le serveur et lesdits systèmes.

Selon une variante de réalisation, le procédé peut mettre en œuvre des règles de partage du spectre entre deux ou plusieurs systèmes en fonction de la date et de l'heure.

Le procédé selon l'invention est utilisé pour des réseaux radio.

Selon un mode de réalisation, le procédé met en œuvre un algorithme de répartition du spectre mis en œuvre par le serveur comportant les étapes suivantes :
**Demande affiliation d'un système de radio-transmission**
   Décodage:
      - De la zone ou des zones de couverture prévues, Zk,
      - De la gamme de fréquence dans lequel le réseau opère, Bk,
      - De la capacité du réseau à changer de fréquence dans la gamme,
      - De la capacité du réseau à travailler avec une largeur de bande variable
   Identification des réseaux en partage de spectre en fonction:
      - De la zone géographique Zi,
      - De la gamme de fréquence Bi,
**Pour chaque zone géographique Zi impactée par le nouveau réseau:**
   - Positionner les systèmes contraints en fréquence,
   - Déterminer dans la gamme de fréquence commune la meilleure fréquence du nouveau réseau, celle fournissant la plus large bande, en tenant compte de ses capacités spectrales,
   - Déterminer les couples de systèmes adjacents au sens spectral au nouveau réseau,
Pour chaque système adjacent au système contraint:
   - Calculer la bande de garde nécessaire compte tenu des caractéristiques des deux types de systèmes,
   - Si les deux sont à largeur de bande fixe, vérifier que cette bande est disponible, sinon remonter une alarme,
   - Si l'un est à bande variable et l'autre à bande fixe, calculer la largeur de bande maximale du système à largeur de bande variable compte tenu de la bande de garde et compte tenu de la possibilité de fixer ou non la largeur des sous-porteuses,
   - Si les deux ont une bande variable, calculer les largeurs de bandes maximales applicables à chacun des systèmes.
Pour chaque système à largeur variable:
   - Compte tenu des adjacences, calculer les largeurs de canalisations autorisées,
   - indiquer au système la fréquence, les canalisations, le point d'accès IP, par exemple, du ou des systèmes avec lesquels le spectre sera partagé et le protocole applicable pour la gestion semi-statique du spectre entre système.

L'étape d'initialisation est, par exemple, exécutée de la manière suivante :

### Réception d'une configuration du serveur:

le serveur va indiquer à chaque système avec quels autres systèmes, il va interagir :
- établissement d'une liaison IP avec le sous-système de gestion du spectre de chacun des systèmes présents dans les bandes adjacentes,
- démarrage du système avec les paramètres de fréquence, largeur de bande et canalisation des sous-porteuses précédemment calculés,
- démarrage du protocole de partage du spectre avec l'autre système avec lequel la liaison est établie.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de mise en œuvre du procédé selon l'invention,
- La figure 2, un exemple de répartition du spectre, et
- La figure 3, un autre exemple de mise en œuvre du procédé selon l'invention.

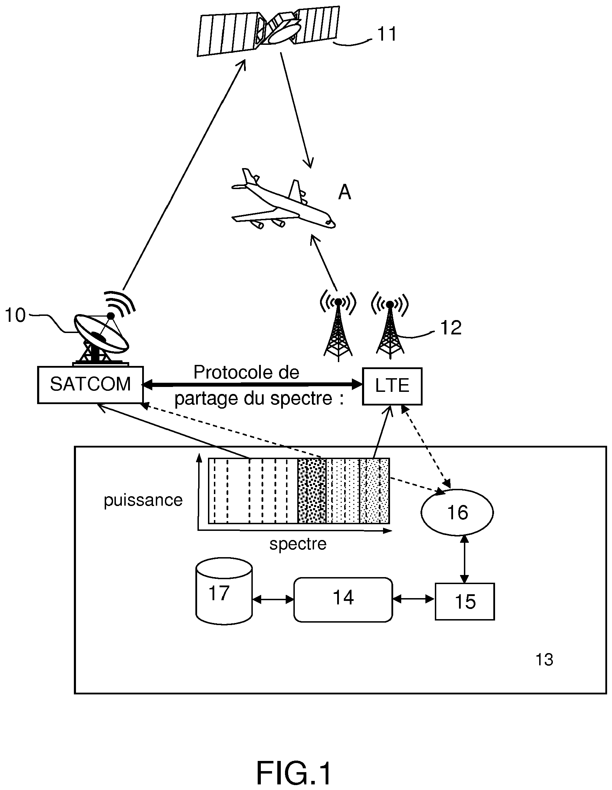

La figure 1 schématise un exemple de mise en œuvre du procédé selon l'invention pour gérer le partage de spectre au moyen, par exemple, d'un serveur 13 relié à un premier réseau 10 de type Satcom opéré par un premier opérateur communiquant avec un satellite 11 par des moyens appropriés, et un deuxième réseau 12 de type LTE opéré par un deuxième opérateur, disponible pour des utilisateurs d'un avion A par exemple. La bande de spectre partagée est, par exemple, l'intervalle de fréquence [15-20 MHz]. L'avion A écoute par exemple le réseau sol LTE, ou le réseau Satcom ou encore les deux et peut se connecter avec les deux. Dans le contexte, des premiers systèmes de radiotransmission S₁ vont chercher à s'affilier au premier réseau 10 et des deuxièmes systèmes de radiotransmission S₂ au deuxième réseau 12.

Le serveur 13 comporte, par exemple, un processeur 14 adapté à exécuter les étapes du procédé selon l'invention, un module 15 de gestion d'affiliation des systèmes, un module de communication 16 ou d'échanges de données avec le Satcom et avec le réseau de type LTE. Le serveur 13 dispose en mémoire 17, d'un ensemble de règles de répartition du spectre qui sont communiquées par les systèmes qui vont s'affilier. Le serveur va utiliser ces règles pour répartir le spectre et calculer les bandes de garde, si nécessaire, à insérer pour des systèmes contraints, par exemple. Lors de l'affiliation d'un système, le serveur va mémoriser les caractéristiques des différents systèmes lors de leur affiliation.

Dans l'exemple donné, le serveur 13 est centralisé et gère globalement le spectre, dans une gamme spectrale donnée, sur une zone géographique donnée.

Le premier réseau et le deuxième réseau sont amenés à partager une bande de spectre Bi qui peut être divisée en N sous-bandes SBI.

Selon une autre variante de réalisation, on pourrait imaginer, après que le serveur ait géré le partage de spectre, que les systèmes affiliés ou les réseaux, communiquent directement entre eux afin de définir les sous-bandes qu'ils vont utiliser. Dans ce cas, les réseaux ou systèmes vont communiquer entre eux en utilisant le protocole et les règles de partage du spectre que le serveur leur aura transmis.

Un système Sk est notamment caractérisé par une bande de fréquence Bₖ qu'il utilise, une zone géographique Zₖ et une forme d'onde Mₖ pour les communications, éventuellement par un critère de priorité. Par exemple, la priorité pourrait être liée à une plage temporelle d'utilisation dans la journée, attribuée par réseau. Chaque système considéré dans la description comporte des moyens d'émission/réception, un processeur, des moyens de communication avec au moins le serveur et éventuellement avec d'autres systèmes affiliés qui vont utiliser une même bande de spectre.

A un instant donné, le serveur regarde les systèmes de radiotransmission ou des réseaux qui génèrent une demande d'affiliation. Le serveur va mémoriser, pour un système Rₖ donné, sa nature, est-il un système contraint R_{Ck} ou un système non contraint R_{nCk}, la bande de fréquence dont il a besoin Bₖ, la forme d'onde qu'il utilise Mₖ, la zone géographique Zₖ qu'il couvre. Les règles et les modalités de partage du spectre sont communiquées au serveur par chaque réseau ou système après leur affiliation.

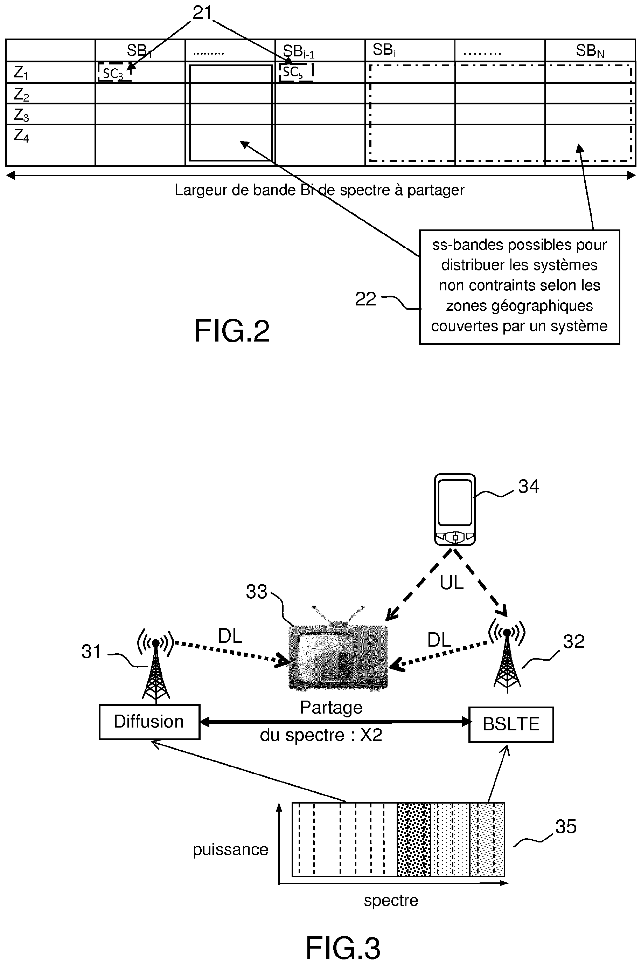

En résumé, pour chaque système ou pour chaque réseau, Rₖ le serveur va exécuter par exemple les étapes suivantes :
Pour tout Rₖ affilié
Rₖ est-il un système contraint ?
si oui, alors le serveur prend en compte la bande de spectre demandée Bₖ et la zone géographique Zₖ, et regarde si une sous-bande du spectre partagé Bi correspond à la demande de R_{Ck}, si oui il affecte la sous-bande au système R_{ck}, et détermine les bandes de garde à insérer,
si ce n'est pas un système contraint, alors le serveur va rechercher s'il existe un autre réseau contraint affilié, si oui, il va rechercher s'il est possible de lui attribuer une sous-bande du spectre,
après avoir considéré tous les systèmes qui lui sont affiliés, le serveur a attribué aux systèmes contraints R_{ck} affiliés une ou plusieurs sous-bandes de spectre, 21 sur la figure 2, en fonction de la zone géographique associée au système,
le serveur considère ensuite les systèmes non contraints R_{nck},
il applique les règles d'attribution, considère les sous-bandes disponibles restant après attribution pour les systèmes contraints, zones 21 sur la figure 2 et va regarder pour chaque système non contraint R_{nck} s'il existe, pour une zone géographique Zₖ, une sous-bande de fréquence SBₖ disponible, si oui alors il attribue à ce système R_{nck} une sous-bande SBₖ, sinon il va remonter une alarme traduisant l'impossibilité d'attribuer une sous-bande du spectre.

L'algorithme de répartition du spectre mis en œuvre par le serveur comporte, par exemple, les étapes décrites ci-après.
**Demande affiliation d'un système de radio-transmission, par exemple**
   Décodage:
      - De la zone ou des zones de couverture prévues, Zk,
      - De la gamme de fréquence dans lequel le réseau opère, Bk,
      - De la capacité du réseau à changer de fréquence dans la gamme,
      - De la capacité du réseau à travailler avec une largeur de bande variable
   Identification des réseaux en partage de spectre en fonction:
      - De la zone géographique Zi,
      - De la gamme de fréquence Bi.
**Pour chaque zone géographique Zi impactée par le nouveau réseau:**
   - Positionner les systèmes contraints en fréquence (e.g. opérateur),
   - Déterminer dans la gamme de fréquence commune la meilleure fréquence du nouveau réseau, celle fournissant la plus large bande, en tenant compte de ses capacités spectrales,
   - Déterminer les couples de systèmes adjacents au sens spectral au nouveau réseau.
Pour chaque système adjacent au système contraint:
   - Calculer la bande de garde nécessaire compte tenu des caractéristiques des deux types de systèmes,
   - Si les deux sont à largeur de bande fixe **→** vérifier que cette bande est disponible, sinon remonter une alarme,
   - Si l'un est à bande variable et l'autre à bande fixe **→** calculer la largeur de bande maximale du système à largeur de bande variable compte tenu de la bande de garde et compte tenu de la possibilité de fixer ou non la largeur des sous-porteuses,
   - Si les deux ont une bande variable **→** calculer les largeurs de bandes maximales applicables à chacun des systèmes.
Pour chaque système à largeur variable:
   - Compte tenu des adjacences, calculer les largeurs de canalisations autorisées,
   - Lui indiquer la fréquence, les canalisations, le point d'accès IP, par exemple, du ou des systèmes avec lesquels le spectre sera partagé et le protocole applicable pour la gestion semi-statique du spectre entre système.

Sans sortir du cadre de l'invention, on pourrait aussi appliquer ces différentes étapes à l'affiliation d'un réseau.

L'initialisation du procédé peut être exécutée de la manière suivante :

### Réception d'une configuration du serveur:

le serveur va indiquer à chaque système avec quels autres systèmes, il va interagir :
- établissement d'une liaison IP avec le sous-système de gestion du spectre de chacun des systèmes présents dans les bandes adjacentes,
- démarrage du système avec les paramètres de fréquence, largeur de bande et canalisation des sous-porteuses précédemment calculés,
- démarrage du protocole de partage du spectre avec l'autre système avec lequel la liaison est établie.

Selon une variante de réalisation, le partage du spectre peut être dynamique et le serveur peut appliquer des règles de partage du spectre entre deux systèmes en fonction de la date et de l'heure.

Dans le cas de système contraint, le type de modulation utilisée peut ne pas être une modulation OFDM, et dans ce cas, le serveur déterminera la bande de garde à insérer pour un système contraint donné en tenant compte des systèmes adjacents au sens spectral, du système.

Dans le cas de systèmes non contraints adjacents qui utilisent la modulation OFDM mais avec des largeurs de bande variables d'un système à l'autre, il sera dans certains cas nécessaire d'introduire une bande de garde en fonction des caractéristiques radios respectives des systèmes.

Dans le cas de systèmes non contraints adjacents, qui disposeraient en plus de régler de manière dynamique la canalisation des sous-porteuses, la mise en œuvre du protocole de négociation peut permettre de fixer la valeur de la largeur canal des sous-porteuses entre deux systèmes par zone géographique. Ceci permet avantageusement de réaliser une orthogonalisation dans les zones géographiques où deux systèmes sont simultanément présents, sans avoir besoin d'introduire de bande de garde entre les deux systèmes.

La mise en œuvre d'un protocole automatique de négociation inter-systèmes permet de fixer la fréquence absolue de l'une par rapport à l'autre de manière à ce que les sous-porteuses soient effectivement orthogonales.

Le système pourra utiliser une modulation de type SOFDM.

Les exemples décrits précédemment s'appliquent pour des systèmes avec une modulation de fréquence OFDMA de 15 KHz, telle qu'appliquée par la technologie LTE.

La figure 3 schématise un exemple de mise en œuvre du procédé selon l'invention dans le cas d'une réduction temporaire et localisée de la capacité broadcast de la télévision numérique ou TNT. Dans cet exemple, on va utiliser par exemple un système de diffusion ou « broadcast », 31, avec une fréquence orthogonale compatible de la couche physique, PHY, du réseau LTE, une modulation OFDM avec sous-porteuse de 15 KHz. Dans cette figure, l'interférence sans mise en œuvre du procédé a lieu sur le récepteur TNT, 33, qui reçoit à la fois la diffusion provenant du système 31 et entre l'émission montante UL (Up Link), 34, des terminaux mobiles. La bande d'émission du terminal est en effet adjacente à la bande de réception du récepteur TNT.

En cas de nécessité, et si les règles de partage du spectre privilégient un usage pour la sécurité civile, la diffusion de la TNT va libérer une partie du spectre dans la zone géographique concernée. Ce spectre va pouvoir être utilisé pour des réseaux de sécurité, par exemple de la sécurité civile, de la vidéo surveillance, etc. Dans un exemple de déploiement particulier, le spectre partagé entre la TNT et le système LTE sur le territoire national couvre une bande de 9 MHz. La TNT dispose de capacités fréquentielles sous cette bande, couvrant un spectre de plusieurs dizaines de MHz. le système LTE, utilisé par les forces de sécurité civile, dispose d'un spectre propre de 3 MHz au-dessus de cette bande de 9 MHz. En temps normal ce spectre n'est utilisé que par les émetteurs TNT. En cas d'intervention importante nécessitant d'utiliser les communications de manière vitale, les forces de sécurité peuvent demander via le système 35, à ce que les émetteurs TNT diffusant sur la zone d'intervention libèrent du spectre, jusqu'à hauteur de 9 MHz, au profit du système LTE pendant la durée de l'intervention. En fin d'intervention, le système LTE indique que le spectre est à nouveau disponible, seuls les 3 MHz dédiés en propre restent utilisable par les forces de sécurité. Cette variante permet un partage dynamique du spectre pour la direction descendante DL (Down Link) ou montante UL. Il sera possible d'utiliser l'interface standardisée X₂ du LTE.

Le procédé selon l'invention est notamment utilisé pour fournir une interface de gestion du spectre reprenant le partage de spectre de la forme 3GPP TS 36.423 connue de l'homme du métier et étendant cette norme: entre systèmes 3GPP (LTE) et non 3GPP, i.e. Satcom, diffusion TV ou Broadcast TV. Le procédé permettra cette communication, non pas en fonction d'un lien X2 entre deux équipements de transmission mais entre deux équipements de gestion et de supervision du spectre dans les zones géographiques dans lesquelles ces systèmes transmettent.

Le procédé selon l'invention permet de gérer le partage de spectre entre plusieurs moyens radios établis dans des bandes adjacentes. L'invention offre ainsi plus de disponibilité du spectre pour des communications critiques. Lorsque les systèmes ont la même couche physique, l'utilisation de bande de garde peut être évitée.

## Revendications

1. Procédé de partage du spectre dans un réseau de communication comportant au moins un premier réseau (10) comprenant des premiers systèmes S₁ de transmission et un deuxième réseau (12) comprenant des deuxièmes systèmes S₂ de transmission, les réseaux travaillant dans des gammes de fréquences pouvant se superposer au moins partiellement et dans une même zone géographique, conduisant à partager une bande de spectre, **caractérisé en ce qu'**il comporte au moins les étapes suivantes :
• Affilier le au moins premier système et le au moins deuxième système à un serveur (13) et communiquer à ce denier des règles de partage du spectre,
• Déterminer s'il existe un système contraint pour lequel la bande de fréquence est fixe et si oui, attribuer audit système contraint une première sous-bande de spectre de la bande de spectre partagée, pour une zone géographique donnée, générer une alarme si ce n'est pas possible,
• Effectuer cette attribution pour toutes les zones géographiques couvertes par ledit système contraint,
• Identifier les systèmes non contraints et en appliquant les règles de partage du spectre, attribuer à chacun des systèmes non contraints et chaque zone géographique définie, une sous-bande de spectre pour chacun des systèmes en fonction de la zone géographique couverte par le réseau, et dans le cas où il y a impossibilité de trouver une sous-bande de spectre, générer une alarme.

2. Procédé selon la revendication 1 **caractérisé en ce que** les systèmes non contraints utilisent une modulation OFDM avec une largeur de bande variable d'un système à l'autre et **en ce que** l'on insère une bande de garde au niveau de la ou des sous-bandes attribuées à un système.

3. Procédé selon l'une des revendications précédentes **caractérisé en ce que** l'on utilise une liaison IP entre le serveur et lesdits systèmes.

4. Procédé selon l'une des revendications 1 à 2 **caractérisé en ce qu'**on utilise des règles de partage du spectre entre deux ou plusieurs systèmes en fonction de la date et de l'heure.

5. Procédé selon l'une des revendications précédentes **caractérisé en ce que** les réseaux sont des réseaux radio.

6. Procédé selon l'une des revendications précédentes **caractérisé en ce que** les systèmes utilisent une modulation de fréquence OFDMA de 15 KHz, telle qu'appliquée par la technologie LTE.

7. Procédé selon l'une des revendications 1 à 6 **caractérisé en ce qu'**il met en œuvre un algorithme de répartition du spectre mis en œuvre par le serveur comportant les étapes suivantes :
**Demande affiliation d'un système de radio-transmission**
Décodage:
• De la zone ou des zones de couverture prévues, Zk,
• De la gamme de fréquence dans lequel le réseau opère, Bk,
• De la capacité du réseau à changer de fréquence dans la gamme,
• De la capacité du réseau à travailler avec une largeur de bande variable
Identification des réseaux en partage de spectre en fonction:
• De la zone géographique Zi,
• De la gamme de fréquence Bi,
**Pour chaque zone géographique Zi impactée par le nouveau réseau:**
• Positionner les systèmes contraints en fréquence,
• Déterminer dans la gamme de fréquence commune la meilleure fréquence du nouveau réseau, celle fournissant la plus large bande, en tenant compte de ses capacités spectrales,
• Déterminer les couples de systèmes adjacents au sens spectral au nouveau réseau,
Pour chaque système adjacent au système contraint:
• Calculer la bande de garde nécessaire compte tenu des caractéristiques des deux types de systèmes,
• Si les deux sont à largeur de bande fixe, vérifier que cette bande est disponible, sinon remonter une alarme,
• Si l'un est à bande variable et l'autre à bande fixe, calculer la largeur de bande maximale du système à largeur de bande variable compte tenu de la bande de garde et compte tenu de la possibilité de fixer ou non la largeur des sous-porteuses,
• Si les deux ont une bande variable, calculer les largeurs de bandes maximales applicables à chacun des systèmes,
Pour chaque système à largeur variable:
• Compte tenu des adjacences, calculer les largeurs de canalisations autorisées,
• indiquer au système la fréquence, les canalisations, le point d'accès IP, par exemple, du ou des systèmes avec lesquels le spectre sera partagé et le protocole applicable pour la gestion semi-statique du spectre entre système.

8. Procédé selon la revendication 7 **caractérisé en ce que** pour l'étape d'initialisation le serveur va indiquer à chaque système avec quels autres systèmes, il va interagir, puis l'étape est exécutée de la manière suivante :
• Etablissement d'une liaison IP avec le sous-système de gestion du spectre de chacun des systèmes présents dans les bandes adjacentes,
• Démarrage du système avec les paramètres de fréquence, largeur de bande et canalisation des sous-porteuses précédemment calculés,
• Démarrage du protocole de partage du spectre avec l'autre système avec lequel la liaison est établie.

9. Système pour la mise en œuvre du procédé selon l'une des revendications 1 à 8 comprenant un serveur (13) relié à un premier réseau (10) opéré par un premier opérateur communiquant avec un satellite (11) par des moyens appropriés, et un deuxième réseau (12) opéré par un deuxième opérateur, le serveur (13) comportant un processeur (14) adapté à exécuter les étapes du procédé selon l'invention, un module (15) de gestion d'affiliation des systèmes, un module de communication (16) une mémoire (17) d'un ensemble de règles de répartition du spectre qui sont communiquées par les systèmes qui vont s'affilier

10. Système selon la revendication 9 **caractérisé en ce que** le deuxième réseau est un réseau LTE.

## Patentansprüche

1. Verfahren zum gemeinsamen Nutzen des Spektrums in einem Kommunikationsnetz, das wenigstens ein erstes Netzwerk (10), das erste Übertragungssysteme S₁ umfasst, und ein zweites Netzwerk (12) umfasst, das zweite Übertragungssysteme S₂ umfasst, wobei die Netzwerke in Frequenzbereichen, die wenigstens teilweise überlappen können, und in einer selben geografischen Zone arbeiten, was zu einer gemeinsamen Nutzung eines Spektralbandes führt, **dadurch gekennzeichnet, dass** es wenigstens die folgenden Schritte beinhaltet:
• Zuordnen des wenigstens ersten Systems und des wenigstens zweiten Systems zu einem Server (13) und Übermitteln von Regeln für die gemeinsame Nutzung des Spektrums an diesen,
• Feststellen, ob ein eingeschränktes System existiert, für das das Frequenzband festgelegt ist, und wenn ja, Zuweisen eines ersten Spektralsubbandes des gemeinsam genutzten Spektralbandes zu diesem eingeschränkten System für eine gegebene geografische Zone, Erzeugen eines Alarms, wenn dies nicht möglich ist,
• Bewirken dieser Zuweisung für alle von dem einschränkten System abgedeckten geografischen Zonen,
• Identifizieren der nicht eingeschränkten Systeme und beim Anwenden der Regeln für die gemeinsame Nutzung des Spektrums, Zuweisen eines Spektralsubbandes für jedes der Systeme in Abhängigkeit von der von dem Netzwerk abgedeckten geografischen Zone zu jedem der uneingeschränkten Systemen und zu jeder definierten geografischen Zone, und Erzeugen eines Alarms, falls es nicht möglich ist, ein Spektralsubband zu finden.

2. Verfahren nach Anspruch 1, **dadurch gekennzeichnet, dass** die uneingeschränkten Systeme eine OFDM-Modulation mit einer variablen Bandbreite von einem System zum anderen benutzen, und dadurch, dass ein Schutzband an dem oder den einem System zugeweisenen Subbändern eingefügt wird.

3. Verfahren nach einem der vorherigen Ansprüche, **dadurch gekennzeichnet, dass** eine IP-Verbindung zwischen dem Server und den Systemen benutzt wird.

4. Verfahren nach einem der Ansprüche 1 bis 2, **dadurch gekennzeichnet, dass** die Regeln zur gemeinsamen Nutzung des Spektrums zwischen zwei oder mehr Systemen in Abhängigkeit von Datum und Uhrzeit benutzt werden.

5. Verfahren nach einem der vorherigen Ansprüche, **dadurch gekennzeichnet, dass** die Netzwerke Funknetzwerke sind.

6. Verfahren nach einem der vorherigen Ansprüche, **dadurch gekennzeichnet, dass** die Systeme eine OFDMA-Frequenzmodulation von 15 KHz nutzen, wie sie durch die LTE-Technologie angewendet wird.

7. Verfahren nach einem der Ansprüche 1 bis 6, **dadurch gekennzeichnet, dass** es einen vom Server implementierten Algorithmus zum Aufteilen des Spektrums nutzt, das die folgenden Schritte beinhaltet:
**Anfordern der Zuordnung eines Funkübertragungssystems**
Decodieren:
• der ein oder mehreren vorgesehenen Abdeckungszonen Zk,
• des Frequenzbereichs, in dem das Netzwerk arbeitet, Bk,
• der Kapazität des Netzwerks, die Frequenz in dem Bereich zu ändern,
• der Kapazität des Netzwerks, mit einer variablen Bandbreite zu arbeiten
Identifizieren von Spektrumsteilungsnetzwerken in Abhängigkeit von:
• der geografischen Zone Zi,
• dem Frequenzbereich Bi,
**Für jede durch das neue Netzwerk betroffene geografische Zone Zi:**
• Positionieren der Systeme mit eingeschränkter Frequenz,
• Bestimmen, in dem gemeinsamen Frequenzbereich, der besten Frequenz des neuen Netzwerks, die das größte Band liefert, unter Berücksichtigung seiner Spektralkapazitäten,
• Bestimmen der dem neuen Netzwerk in Spektralrichtung benachbarten Systempaare,
Für jedes System, das dem eingeschränkten System benachbart ist:
• Berechnen des notwendigen Schutzbandes unter Berücksichtigung der Charakteristiken beider Systemtypen,
• Verifizieren, wenn die beiden eine feste Bandbreite haben, dass dieses Band verfügbar ist, wenn nicht, Auslösen eines Alarms,
• Berechnen, wenn eines eine variable Bandbreite und das andere eine feste Bandbreite hat, der maximalen Bandbreite des Systems mit variabler Bandbreite unter Berücksichtigung des Schutzbandes und unter Berücksichtigung der Möglichkeit, die Breite von Subträgern festzulegen oder nicht,
• Berechnen, wenn die beiden eine variable Bandbreite haben, der maximalen Bandbreiten, die auf jedes der Systeme angewendet werden können,
Für jedes System mit variabler Breite:
• Berücksichtigen der Nachbarschaften, Berechnen der zulässigen Kanalbreiten,
• Anzeigen dem System von Frequenz, Kanälen, IP-Zugangspunkt zum Beispiel des oder jedes Systems, mit denen das Spektrum geteilt wird, und des Protokolls, das für das semistatische Spektrumsmanagement zwischen Systemen anwendbar ist.

8. Verfahren nach Anspruch 7, **dadurch gekennzeichnet, dass** der Server für den Initialisierungsschritt jedem System anzeigt, mit welchen anderen Systemen es interagieren wird, dann wird der Schritt auf die folgende Weise durchgeführt:
• Einrichten einer IP-Verbindung mit dem Managementsubsystem des Spektrums jedes der in den benachbarten Bändern vorhandenen Systeme,
• Starten des Systems mit den Frequenzparametern, der Bandbreite und den Kanälen der zuvor berechneten Subträger,
• Starten des Protokolls der gemeinsamen Nutzung des Spektrums mit dem anderen System, mit dem die Verbindung eingerichtet ist.

9. System zum Durchführen des Verfahrens nach einem der Ansprüche 1 bis 8, umfassend einen Server (13), der mit einem ersten Netzwerk (10), das von einem ersten Betreiber betrieben wird, der über geeignete Mittel mit einem Satelliten (11) kommuniziert, und einem zweiten Netzwerk (12) verbunden ist, das von einem zweiten Betreiber betrieben wird, wobei der Server (13) einen Prozessor (14) umfasst, ausgelegt zum Ausführen der Schritte des erfindungsgemäßen Verfahrens, ein Modul (15) zum Verwalten der Zuordnung der Systeme, ein Kommunikationsmodul (16), einen Speicher (17) für einen Satz von Regeln zur Aufteilung des Spektrums, die von den Systemen kommuniziert werden, die zugeordnet werden.

10. System nach Anspruch 9, **dadurch gekennzeichnet, dass** das zweite Netzwerk ein LTE-Netzwerk ist.

## Claims

1. Method for spectrum sharing in a communication network comprising at least a first network (10) comprising first transmission systems S₁ and a second network (12) comprising second transmission systems S₂, the networks operating in frequency ranges which can be at least partially superimposed and in the same geographical zone, leading to a spectrum band being shared, **characterised in that** it comprises at least the following steps:
• affiliating the at least first system and the at least second system with a server (13) and communicating to the server spectrum sharing rules,
• determining whether there is a constrained system for which the frequency band is fixed and, if yes, attributing to the constrained system a first spectrum sub-band of the shared spectrum band for a specific geographic zone, generating an alarm if this is not possible,
• carrying out this attribution for all the geographic zones covered by the constrained system,
• identifying the non-constrained systems and, while applying the spectrum sharing rules, attributing to each of the non-constrained systems and each defined geographic zone a spectrum sub-band for each of the systems in accordance with the geographic zone covered by the network, and, if it is impossible to find a spectrum sub-band, generating an alarm.

2. Method according to claim 1, **characterised in that** the non-constrained systems use an OFDM modulation with a bandwidth which is variable from one system to the other and **in that** a guard band is inserted in the region of the sub-band(s) attributed to a system.

3. Method according to either of the preceding claims, **characterised in that** an IP connection is used between the server and the systems.

4. Method according to either claim 1 or claim 2, **characterised in that** spectrum sharing rules are used between two or more systems in accordance with the date and time.

5. Method according to any one of the preceding claims, **characterised in that** the networks are radio networks.

6. Method according to any one of the preceding claims, **characterised in that** the systems use a frequency modulation OFDMA of 15 KHz, as applied by LTE technology.

7. Method according to any one of claims 1 to 6, **characterised in that** a spectrum distribution algorithm used by the server is used, comprising the following steps:
**Request for affiliation of a radio transmission** system
Decoding:
• of the coverage zone(s) provided, Zk,
• of the frequency range in which the network operates, Bk,
• of the capacity of the network to change frequency in the range,
• of the capacity of the network to work with a variable bandwidth,
Identification of the spectrum sharing networks in accordance with:
• the geographic zone Zi,
• the frequency range Bi,
**For each geographic zone Zi affected by the new network:**
• positioning the systems which are constrained in terms of frequency,
• determining in the common frequency range the best frequency of the new network, this providing the widest band, taking into account the spectral capacities thereof,
• determining the pairs of systems adjacent in the spectral sense to the new network,
For each system adjacent to the constrained system:
• calculating the guard band required taking into account the characteristics of the two types of system,
• if the two have a fixed bandwidth, verifying that this band is available, otherwise raising an alarm,
• if one has a variable band and the other has a fixed band, calculating the maximum bandwidth of the variable bandwidth system taking into account the guard band and taking into account the possibility of fixing or not fixing the width of the sub-carriers,
• if the two have a variable band, calculating the maximum bandwidths which can be applied to each of the systems,
For each system with variable width:
• taking into account the adjacencies, calculating the permitted channel widths,
• indicating to the system the frequency, the channels, the access point IP, for example, of the system(s) with which the spectrum will be shared and the protocol which can be applied for the semi-static administration of the spectrum between systems.

8. Method according to claim 7, **characterised in that**, for the initialisation step, the server will indicate to each system the other systems with which it will interact, then the step is carried out in the following manner:
• establishing an IP connection with the sub-system for administering the spectrum of each of the systems present in the adjacent bands,
• starting the system with the parameters of the frequency, bandwidth and channel of the sub-carriers previously calculated,
• starting the spectrum sharing protocol with the other system with which the connection is established.

9. System for implementing the method according to any one of claims 1 to 8, comprising a server (13) which is connected to a first network (10) operated by a first operator which communicates with a satellite (11) via appropriate means, and a second network (12) operated by a second operator, the server (13) comprising a processor (14) which is capable of carrying out the steps of the method according to the invention, a module (15) for administering the affiliation of the systems, a communication module (16), a memory (17) of a set of spectrum distribution rules which are communicated by the systems which will become affiliated.

10. System according to claim 9, **characterised in that** the second network is an LTE network.
